(19) Europäisches Patentamt

European Patent Office

Office européen des brevets

(11) **EP 4 568 222 A1**

(12) **EUROPÄISCHE PATENTANMELDUNG**

(43) Veröffentlichungstag:
**11.06.2025 Patentblatt 2025/24**

(21) Anmeldenummer: **23214704.1**

(22) Anmeldetag: **06.12.2023**

(51) Internationale Patentklassifikation (IPC):
**H04L 47/127** *(2022.01)* **H04L 47/28** *(2022.01)*
**H04L 47/78** *(2022.01)* **H04L 47/80** *(2022.01)*
**H04L 47/70** *(2022.01)*

(52) Gemeinsame Patentklassifikation (CPC):
**H04L 47/781; H04L 47/127; H04L 47/28;**
**H04L 47/805; H04L 47/822; H04L 47/826;**
H04L 47/18; H04L 47/801

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(71) Anmelder: **Siemens Aktiengesellschaft**
**80333 München (DE)**

(72) Erfinder:
• **Majewski, Kurt**
**81541 München (DE)**

• **Obradovic, Dragan**
**85521 Ottobrunn (DE)**
• **Scheiterer, Ruxandra**
**82538 Geretsried (DE)**
• **Deroo, Frederik**
**85399 Hallbergmoos (DE)**
• **Ferreira Coelho, Rodrigo**
**91080 Uttenreuth (DE)**
• **Steindl, Günter**
**92284 Poppenricht (DE)**

(74) Vertreter: **Siemens Patent Attorneys**
**Postfach 22 16 34**
**80506 München (DE)**

(54) **VERFAHREN ZUM BETREIBEN EINES NETZWERKS, COMPUTERPROGRAMMPRODUKT, COMPUTERLESBARES SPEICHERMEDIUM SOWIE ELEKTRONISCHE RECHENEINRICHTUNG**

(57) Die Erfindung betrifft ein Verfahren zum Betreiben eines Netzwerks (10), mit den Schritten: Bereitstellen des Netzwerks (10) mit zumindest einem Sendeknoten, zumindest einem Zwischenknoten (14) und zumindest einem Endknoten (16); Empfangen einer Datenstrominformation (18) über einen potenziellen zu sendenden Datenstrom (20) über den Zwischenknoten (14) zu dem Endknoten (16); Bestimmen einer aktuellen Menge an vorherrschenden potenziellen Störern (24, 26); Bestimmen einer maximalen Verzögerung am Zwischenknoten (14) in Abhängigkeit von der Datenstrominformation (18) und in Abhängigkeit von der aktuellen Menge an vorherrschenden potenziellen Störern (24, 26); Bestimmen einer Worst-Case-Übertragungszeit (28) des potenziell zu sendenden Datenstroms (20) in Abhängigkeit von der Datenstrominformation (18) und in Abhängigkeit von der maximalen Verzögerung durch Störer (22); und Entscheiden ob der potenziell zu sendende Datenstrom (20) über den Zwischenknoten (14) gesendet wird in Abhängigkeit von der Datenstrominformation (18) und der bestimmten Worst-Case-Übertragungszeit (28). Ferner betrifft die Erfindung ein Computerprogrammprodukt, ein computerlesbares Speichermedium sowie eine elektronische Recheneinrichtung (12).

FIG 2

EP 4 568 222 A1

**Beschreibung**

Die Erfindung betrifft ein Verfahren zum Betreiben eines Netzwerks (Time Sensitive Network, TSN) mittels einer elektronischen Recheneinrichtung des Netzwerks. Ferner betrifft die Erfindung ein entsprechendes Computerprogrammprodukt, ein computerlesbares Speichermedium sowie eine elektronische Recheneinrichtung.

In dem neuen Kommunikationsstandard von sogenannten "Bridges and Bridged Networks", insbesondere für Zeit-sensitive-Netzwerke, wird sich mit mehreren Prioritätsklassen beschäftigt, insbesondere sogenannten Klassentypen von Nachrichten, die zyklisch durch ein industrielles Kommunikationsnetzwerk gesendet werden müssen. Die Kommunikation wird in Form von Datenströmen (Streams) organisiert. Ein Datenstrom ist dabei insbesondere ein unidirektionaler Datenfluss, von zum Beispiel Eingängen und Ausgängen eines gesteuerten Produktionsprozesses, über eine Reihe von Knoten des Netzwerks, von einem Sendeknoten (Talker) über Zwischenknoten, sogenannten Brücken (Bridges), zu einem oder mehreren Empfangsknoten (Listener). Jeder Sendeknoten hat einen definierten Einspeise-Zyklus, mittels dessen ein Datenstrom gegebenenfalls mit einer Untersetzung gesendet wird.

Industrielle Kommunikation, In-Car Ethernet, Pro-Audio-Video und andere Kommunikationen erfordern die Begrenzung der Übertragungszeit (Latenzzeit, d.h. Zeitintervall zwischen Sendezeitpunkt am Sendeknoten und Empfangszeitpunkt am Endknoten) im Netzwerk. Daher verwenden sie zeitempfindliche Datenströme, das heißt Datenströme, die mit einer begrenzten Latenzzeit geliefert werden müssen. Sofern nicht anders erwähnt, beziehen sich alle Datenströme in diesem Dokument auf zeitempfindliche Datenströme.

Die Kommunikationsplanung muss entscheiden, ob neue Datenströme akzeptiert werden können. Dies geschieht nur, wenn die garantierten Eigenschaften ihres Klassentyps für diese neuen Datenströme erfüllt werden und die Garantien aller bereits geplanten Ströme erhalten bleiben. Solche Garantien hängen von der Prioritätsklasse ab und können zum Beispiel Beschränkungen der Maximallatenzzeit oder die Anforderung von null Stauverlusten (zero congestion loss), was insbesondere keinen Pufferüberlauf auf den Brücken oder den Empfangsknoten bedeutet, sein.

Die Kommunikationsplanung benötigt für die Entscheidung über die Annahme oder Ablehnung eines neuen Datenstroms eine Schätzung der größtmöglichen Übertragungszeit des Datenstroms. Eine wichtige Komponente dieser Übertragungszeit wird durch Interferenzen von anderen Datenströmen verursacht, den sogenannten Störern (Interferer).

Normalerweise gibt es mehrere Prioritätsklassen von Datenströmen mit unterschiedlichen Eigenschaften in einem Netzwerk. Jeder Knoten im Netzwerk unterhält Warteschlangen für jede Datenstrom-Prioritätsklasse, und jede Warteschlange arbeitet intern nach dem sogenannten First-In-First-Out-Prinzip, aber wenn es mehr als eine nicht-leere Warteschlange gibt, wird die Warteschlange mit der höchsten Priorität als nächstes bearbeitet.

Die sogenannten Datenpakete (Frames) dieser Datenströme werden in Einspeise-Zyklen gesendet, und ihre Klassenbeschränkungen sind beispielsweise bei Datenströmen mit der höchsten im Netz verwendeten Priorität kein Stauverlust und eine maximale Übertragungszeit von z.B. einem Bruchteil des Einspeise-Zyklus ihres Sendeknotens. Der Einspeise-Zyklus ist die Zeitspanne, in der sich die Abfolge von Operationen beim Sendeknoten wiederholt, zum Beispiel die Bestimmung des Zeitpunkts, zu dem Frames in der Warteschlange höchster Priorität gesendet werden können. Darüber hinaus können die Datenströme der höheren Prioritätsklasse den Sendevorgang von Datenströmen niedrigerer Prioritätsklassen unterbrechen, falls "frame preemption" eingeschaltet ist. Die Einhaltung der garantierten Klasseneigenschaften wird immer durch einen (in der Regel inkrementellen) Aufnahmeprozess gewährleistet, innerhalb dessen das System die Einrichtung eines neuen Datenstroms verweigern kann, um alle erforderlichen Garantien für die bereits angenommenen Datenströme aufrechtzuerhalten. Anträge auf Hinzufügung oder Löschung von Datenströmen können entweder einen oder mehrere Datenströme enthalten.

Ebenso kann die Einspeisung von Datenströmen in das Netzwerk als ununterbrochene Folge, sogenannter Burst, insbesondere pro Warteschlange (per queue scheduling), oder mit Zwischenräumen, insbesondere pro Datenstrom (per frame scheduling), erfolgen.

Die Kommunikationsplanungsentscheidung über die Annahme oder Ablehnung eines Datenstroms zur Laufzeit erfordert ein effizientes Verzögerungsmodell (delay model) für die Datenpakete der Datenströme, aufgrund dessen die durch feste Verzögerung und Interferenz mit anderen Datenströmen verursachte größtmögliche Übertragungszeit eines Datenstroms (als obere Schranke) berechnet wird.

Im Stand der Technik werden derzeit zum Beispiel entsprechende Zeitfenster berechnet, die den Zwischenknoten beziehungsweise Brücken mitgeteilt werden und für jeden Datenstrom reserviert werden, sodass keine zwei Datenpakete, die über dieselbe Ausgangsverbindung (Port) übertragen werden, gleichzeitig am Ausgangsport ankommen können. Auf diese Weise werden die Datenströme voneinander isoliert, insbesondere klasseninterne Interferenzen werden eliminiert, und der Determinismus des Dienstes an jedem Zwischenknoten wird erreicht. Diese Ansätze sind als Stream Isolation bekannt, und erfordern eine Zeitinformation und Synchronisation für alle Zwischenknoten.

Aufgabe der vorliegenden Erfindung ist es, ein Verfahren, ein Computerprogrammprodukt, ein computerlesbares Speichermedium sowie eine elektronische Recheneinrichtung zu schaffen, mittels welcher ein neuartiger und/oder verbesserter Betrieb eines Zeit-sensitiven-Netzwerks ermöglicht ist.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft dabei ein Verfahren zum Betreiben eines Netzwerks mittels einer elektronischen Recheneinrichtung des Netzwerks. Es erfolgt das Bereitstellen des Netzwerks mit zumindest einem Sendeknoten, einem Zwischenknoten und einem Endknoten. Es wird eine Datenstrominformation (z.B. Sendeknoten, Endknoten, Prioritätsklasse, Übertragungspfad, Datenpaketlänge, Zeitanforderungen) über einen potenziellen über den zumindest einen Zwischenknoten zu dem Endknoten zu sendenden Datenstrom mittels der elektronischen Recheneinrichtung empfangen. Für den zumindest einen Zwischenknoten erfolgt das Bestimmen einer aktuell vorherrschenden Menge an potenziellen Störern aus der Gesamtmenge der bereits geplanten Datenströme, die beispielsweise an diesem Zwischenknoten den gleichen Ausgangsport benutzen, mittels der elektronischen Recheneinrichtung. Es wird eine Worst-Case-Übertragungszeit des potenziell zu sendenden Datenstroms, insbesondere mittels der Worst-Case-Übertragungszeit seiner Datenpakete, in Abhängigkeit von der Datenstrominformation und in Abhängigkeit von der aktuell vorherrschenden Menge an potenziellen Störern mittels der elektronischen Recheneinrichtung bestimmt. Das Ergebnis wird für die Entscheidung verwendet, ob der potenziell zu sendende Datenstrom über den Zwischenknoten gesendet werden kann. Dies erfolgt insbesondere unter den Voraussetzungen, dass seine eigenen Klassengarantien erfüllt sind (a) und/oder in Abhängigkeit von der Datenstrominformation und der bestimmten maximalen Menge an potenziellen Störern mittels der elektronischen Recheneinrichtung.

Mittels der gleichen Methode kann als Nächstes überprüft werden, ob die bereits angenommenen Datenströme immer noch zuverlässig übertragen werden können, ohne aufgrund des potenziellen neuen Datenstroms ihre Klassengarantien zu verletzen (b). Es werden lediglich Datenströme angenommen, welche sowohl (a) als auch (b) erfüllen. Insbesondere wird hierbei für jeden beteiligten Datenstrom ein Worst-Case-Szenario berücksichtigt, sodass sichergestellt werden kann, dass sowohl der potenziell zu sendende Datenstrom als auch die bereits angenommenen Datenströme zuverlässig übertragen werden können.

Insbesondere kann somit ein Netzwerk mit Zeit-Sensitivem Nachrichtenverkehr, das heißt eines Netzwerks welches passend konfiguriert wurde, um zeit-sensitiven Verkehr zu ermöglichen, betrieben werden. Die Datenstrominformation wird insbesondere einschließlich vorgegebener, maximal erlaubter Übertragungszeit empfangen.

Der Zwischenknoten kann dabei lediglich einen einzigen Eingangs Port zum Empfangen von Datenströmen und einen einzigen Ausgangsport zum Senden von Datenströmen aufweisen. Ferner kann ein Zwischenknoten auch eine Vielzahl an Eingangs Ports und/oder eine Vielzahl von Ausgangsports aufweisen.

Insbesondere ist somit das Verfahren weder auf Zeit-synchronisierte Zwischenknoten noch auf eine entsprechende Gate-Steuerung in den Knoten angewiesen. Folglich ist das Verfahren flexibler in Bezug auf die Hardware- und Softwareanforderungen und unterstützt ein schnelles Hinzufügen und Entfernen von Datenströmen und Endknoten im Netzwerk. Da es sich um einen iterativen Prozess handelt, kann die Methode sowohl in einer Situation angewendet werden, in der nur ein Datenstrom hinzugefügt wird, als auch in einer Situation angewendet werden, in der dem Zeit-sensitiven-Netzwerk mehrere Datenströme hinzugefügt werden. Diese Methode kann offline vom Engineering, zusammen mit einer bereits vorgenommenen Teilplanung, oder Online inkrementell angewendet werden.

Insbesondere ist somit das Zeit-sensitive Netzwerk mit synchronisierten Sendeknoten vorgeschlagen. Es handelt sich bei den Sendeknoten insbesondere um sogenannte zeitbewusste (time aware) Endstationen, die die Datenströme im Netz senden und empfangen. Entsprechende Einspeise-Zyklen der Sendeknoten sind ganzzahlige Vielfache eines gemeinsamen kleinsten Zeitintervalls $GC_{min}$. Ein Sonderfall ist die Wahl der Einspeise-Zyklen als Zweierpotenzen von $GC_{min}$, was die Berechnung vereinfacht. Diese Wahl reduziert die Menge der möglichen Störer und führt zu engeren oberen Schranken für die Übertragungszeit, ist aber nicht unbedingt notwendig.

Sowohl bei gleichen als auch bei unterschiedlichen Perioden der Datenströme gibt es eine Periodizität des geplanten Datenverkehrs höchster Priorität im Netzwerk, eine sogenannte Hyperperiode. Ein potenziell zu sendender Datenstrom kann nur dann akzeptiert werden, wenn innerhalb dieser Hyperperiode die Bedingungen seiner Datenstrominformation in jedem Einspeise-Zyklus, in welchem eines seiner Datenpakete gesendet wird, erfüllt sind. Daher wird im Folgenden ein beliebiger Einspeise-Zyklus des Datenstroms betrachtet.

Eine Übertragungszeitbeschränkung für Datenströme höchster Priorität im Netzwerk ist bekannt. Ein Sonderfall ist, dass keine zwei Datenpakete eines Datenstroms gleichzeitig unterwegs sind, das sogenannte "frames-in-flight $\leq 1$" (eine stärkere Latenzbeschränkung ist ebenfalls möglich). Die minimalen und maximalen Übertragungszeiten (siehe IEEE 802.1Q-2022, 12.32.1) in den Endknoten und den Zwischenknoten auf dem Übertragungspfad, in Abwesenheit von Störern, sowie die Verzögerungen auf den Übertragungsleitungen, sind bekannt. Die maximale Verarbeitungszeit entlang eines Pfades für ein Datenpaket, sowie der Synchronisations-Jitter beim Sendeknoten, werden zur oberen Schranke der Interferenz-Verzögerung addiert, bevor geprüft wird, ob die Übertragungszeit unterhalb der definierten Grenze liegt.

Aufgrund ihrer Synchronisation haben alle Sendeknoten eine gemeinsame Zeitbasis. Weil alle Einspeise-Zyklen Vielfache eines gemeinsamen kleinsten Zeitintervalls $GC_{min}$ sind, weist die gemeinsame Zeitbasis eine Rasterstruktur auf, mit Intervallen im Abstand $GC_{min}$, und es liegen sämtliche Anfangszeitpunkte von Einspeise-Zyklen auf Rasterpunkten.

In jedem einzelnen Einspeise-Zyklus innerhalb einer Hyperperiode wird eine Reihe von Datenpaketen einer definierten, im Netzwerk höchsten, Priorität in das Netz eingespeist, die aufgrund ihrer Übertragungszeitbeschränkung in jedem Zwischenknoten ihres Pfades in einem Zeitintervall mit bekannter maximaler Länge vorhanden sind. Ein Sonderfall ist, dass sie ausschließlich während ihres Einspeise-Zyklus vorhanden sind, aber nicht darüber hinaus.

Wenn ein Datenpaket bei einem Zwischenknoten ankommt, wird das "signifikante Bit" das Bit genannt, dessen Empfang die Eintragung in die Ausgangswarteschlange auslöst. Das signifikante Bit eines Datenpakets kann in verschiedenen Zwischenknoten entlang seines Pfades unterschiedlich sein, je nach Weiterleitungsmechanismus ("forwarding"), in Abhängigkeit von den Fähigkeiten des Zwischenknotens und dem Eingangs- und Ausgangsgeschwindigkeits-Paar der Verbindung. Beispielsweise ist bei Store-and-Forward (S&F) das signifikante Bit das letzte Bit, während es bei Cut-Through (CT/dCT) nach dem Headerabschnitt liegt, der nötig ist, um den Ausgangsport zu bestimmen.

Ferner ist eine Menge von bereits akzeptierten Datenströmen S dieser definierten Prioritätsklasse mit ihren Pfaden vom Sendeknoten zum Empfangsknoten gegeben, die alle ihre Datenstrominformationen erfüllen. Des Weiteren ist ein neuer Datenstrom mit seiner Datenstrominformation gegeben, der geplant werden soll, zusammen mit einem Einspeise-Zyklus r (der Phase genannt wird) der als jener Zyklus betrachtet wird, in dem mit dem Senden des Datenstroms begonnen werden soll. Die Auswahl geeigneter Phasen ist Aufgabe der elektronischen Recheneinrichtung, insbesondere bei einer Phasenzuweisung, und wird als gegeben betrachtet.

Der Planungsalgorithmus akzeptiert den neuen Datenstrom in Phase r nur dann, wenn nach seiner hypothetischen Einbeziehung in Phase r die Bedingungen (der Datenstrominformation) des neuen Datenstroms erfüllt sind und die Bedingungen aller zuvor akzeptierten Datenströme weiterhin erfüllt sind. Andernfalls verweigert die elektronische Recheneinrichtung die Hinzunahme des neuen Datenstroms in Phase r.

Zur Überprüfung der Übertragungszeit des Datenpakets wird insbesondere eine noch später genannte Konvoi-Analyse (Convoy Analysis) verwendet, um eine Obergrenze (obere Schranke) für die Verzögerung durch Störer eines Datenpakets an einem bestimmten Zwischenknoten auf seinem Pfad zu bestimmen. Hierbei wird die Obergrenze insbesondere für ein Worst-Case-Verhalten im Netzwerk bestimmt. Da diese Methode auf der Bestimmung einer Obergrenze für die Worst-Case-Warteschlange an jedem Zwischenknoten basiert, kann sie auch zur Überprüfung der Einschränkung "kein Datenpaketverlust", das heißt kein Pufferüberlauf, verwendet werden.

Gemäß einer weiteren vorteilhaften Ausgestaltungsform ist vorgesehen, dass zum Betreiben des Netzwerks die elektronische Recheneinrichtung mittels einer zentralen Kontrolleinheit implementiert wird, welche über eingehende Kommunikations-Anträge von Endknoten des Netzwerks entscheidet, insbesondere über die Hinzunahme von durch diese Anträge beantragten potenziell zu sendenden Datenströmen. Dadurch können die für diese Entscheidung notwendigen Informationen gebündelt an einer Stelle bereitgestellt werden.

Es hat sich weiterhin als vorteilhaft erwiesen, wenn die Hinzunahme des potenziell zu sendenden Datenstroms in einem gegebenen Einspeisezyklus über den Zwischenknoten von der elektronischen Recheneinrichtung abgelehnt wird, wenn die bestimmte Worst-Case-Übertragungszeit höher bestimmt wird, als eine in der Datenstrominformation vorgegebene maximale Übertragungszeit, und dass der potenziell zu sendende Datenstrom in dem gegebenen Einspeisezyklus über den Zwischenknoten von der elektronischen Recheneinrichtung akzeptiert oder weiterhin als Kandidat betrachtet wird, wenn die bestimmte Worst-Case-Übertragungszeit geringer oder gleich bestimmt wird als eine in der Datenstrominformation vorgegebene maximale Übertragungszeit. Insbesondere kann somit der potenziell zu sendende Datenstrom von der Recheneinrichtung in Phase r akzeptiert oder weiterhin als Kandidat betrachtet werden, wenn die bestimmte Worst-Case-Übertragungszeit geringer bestimmt wird als eine in der Datenstrominformation vorgegebene Übertragungszeit. Ferner wird insbesondere der potenziell zu sendende Datenstrom von der Recheneinrichtung in Phase r abgelehnt, wenn die bestimmte maximale Übertragungszeit höher bestimmt wird als eine in der Datenstrominformation vorgegebene Übertragungszeit. Beispielsweise kann dann vorgesehen sein, dass die Recheneinheit für diesen Datenstrom eine andere Phase oder einen anderen Übertragungspfad ermittelt. Somit können die entsprechenden Regeln eingehalten werden, dass der zu sendende Datenstrom auch unter Worst-Case-Bedingungen rechtzeitig beim Empfangsknoten ankommt.

Ebenfalls kann vorgesehen sein, dass in Abhängigkeit von der bestimmten Worst-Case-Übertragungszeit eine weitere Worst-Case-Übertragungszeit für jeden Störer aus der aktuellen Menge an vorherrschenden potenziellen Störern bestimmt wird, und der potenziell zu sendende Datenstrom von dem Zwischenknoten nur dann angenommen wird, wenn ein jeweils vorgegebener Schwellwert für jede weitere Worst-Case-Übertragungszeit nicht überschritten wird. Insbesondere wird somit der potenziell zu sendende Datenstrom nur beziehungsweise erst dann angenommen, wenn alle garantierten Eigenschaften bereits geplanter Datenströme/Störer erfüllt bleiben, sodass für jeden bereits geplanten Datenstrom eine ähnliche Berechnung durchgeführt wird, unter Hinzunahme des potenziell zu sendenden Datenstroms.

Weiterhin vorteilhaft ist, wenn die Entscheidung zum Senden in Abhängigkeit von einer in der Datenstrominformation vorgegebenen Prioritätsklasse, für den potenziell zu sendenden Datenstrom gefällt wird. Beispielsweise kann eine Priorität als hoch, mittel oder niedrig eingestuft werden. Es ist ferner möglich, dass auch weitere Prioritätsklassen eingestuft werden können. In Abhängigkeit einer solchen Klassifizierung kann dann entschieden werden, ob beispielsweise der Datenstrom angenommen wird. Insbesondere haben Datenströme mit hoher Priorität einen Vorrang gegenüber Datenströmen mit mittlerer oder niedriger Priorität.

Ferner hat es sich als vorteilhaft erwiesen, wenn eine Übertragungszeitbeschränkung, die insbesondere Teil der Datenstrominformation ist, festgelegt, bekannt, aber uneingeschränkt ist. Dies ermöglicht insbesondere eine breitere Anwendbarkeit des Verfahrens als insbesondere eine Beschränkung auf den gleichen Einspeisezyklus oder Frame in flight $\leq 1$.

Ebenfalls vorteilhaft ist, wenn die Entscheidung zum Senden des Datenstroms in Abhängigkeit von einem vorgegebenen Zeitpunkt am Zwischenknoten gefällt wird. Insbesondere kann ein erster solcher Zeitpunkt als Zero-High-Traffic bezeichnet werden. Diese Zero-High-Traffic-Zeitpunkte sind Zeitpunkte, an denen aufgrund der Eigenschaften des Klassentyps keine Datenpakete mit der definierten Priorität, welche denselben Ausgangsport am Zwischenknoten benutzen wie der Frame of Interest (FOI), auf dem gesamten Pfad des interessierenden Datenpakets (FOI) unterwegs sind. Solche Zero-High-Traffic-Zeitpunkte gibt es bei vielen Netzkonfigurationen immer. Zum Beispiel ist der Beginn einer neuen Hyperperiode ein solcher Zeitpunkt für alle Zwischenknoten und FOIs, wenn die maximale Latenz aller Datenströme ein Bruchteil ihres Einspeisezyklus ist. In vielen Fällen liegen diese Zero-High-Traffic-Zeitpunkte allerdings viel näher beieinander. Ein besonderer Fall ist, wenn es einen einzigen gemeinsamen Einspeise-Zyklus für alle Sendeknoten gibt und die maximale Latenz aller Datenströme ein Bruchteil dieses Einspeisezyklus ist. Dann gibt es am Ende eines jeden Einspeise-Zyklus im ganzen Netzwerk einen Zero-High-Traffic-Zeitpunkt. Ein zweiter Sonderfall liegt vor, wenn die Frames mit der definierten Priorität (High) ihr Ziel innerhalb desselben "Rasterintervalls" erreichen müssen, der Länge $GC_{min}$, in dem sie übertragen wurden. Diese Latenzbeschränkung hat zur Folge, dass am Ende eines jeden Rasterintervalls im ganzen Netzwerk ein Zero-High-Traffic-Zeitpunkt vorhanden ist. Ein zweiter spezieller Zeitpunkt für den FOI ist der Beginn seines Einspeise-Zyklus, $T_0(FOI)$. Wenn dieser Zeitpunkt kein "Zero-High-Traffic"-Zeitpunkt am Zwischenknoten ist, kann es potenziell störende Datenpakete geben, die früher gesendet wurden und noch während der Laufzeit des FOI unterwegs sind. Aus diesem Grund reicht es nicht, mit der Zusammenstellung der Menge potenzieller Störer zum Zeitpunkt $T_0(FOI)$ zu beginnen. Für das Datenpaket $f$ bezeichnet $T_0(f)$ den Beginn seines Einspeise-Zyklus, und $T_1(f)$ den spätesten Zeitpunkt, an dem es aufgrund der Beschränkung der maximalen Latenzzeit sein Ziel erreichen muss. Das Zeitintervall $[T_0(f), T_1(f))$ wird " (maximale) Lebenszeit" von $f$ genannt. Aus der Gruppe der ersten speziellen Zeitpunkte ("Zero-High-Traffic"-Zeitpunkte) für den Ausgangsport $i$ wird ein Sonderzeitpunkt $T_z(FOI,i)$ bestimmt, als der späteste Zeitpunkt der Gruppe, welcher nicht nach dem zweiten besonderen Zeitpunkt liegt. Ein dritter spezieller Zeitpunkt, und insbesondere als bevorzugter Zeitpunkt zu betrachten, für den FOI ist, aus der Menge der Rasterpunkte, ein geeigneter Zeitpunkt $T_r(FOI)$, Referenzzeitpunkt genannt, der zwischen dem Sonderzeitpunkt $T_z(FOI,i)$ und dem zweiten speziellen Zeitpunkt $T_0(FOI)$ (dem Beginn des FOI-Einspeise-Zyklus) liegt. Der Referenzzeitpunkt kann mit $T_0(FOI)$ oder $T_z(FOI,i)$ übereinstimmen. Insbesondere wird $T_r(FOI) = T_0(FOI)$ als erste Wahlmöglichkeit vorgeschlagen.

Ebenfalls vorteilhaft ist, wenn die maximale Übertragungszeit über die Summe der maximalen Wartezeiten an den Zwischenknoten auf dem Pfad des Datenstroms bestimmt wird. Die Wartezeit ist wiederum insbesondere abhängig von den entsprechenden bereits auf dem einzelnen Zwischenknoten geplanten Datenströmen (d.h. deren Pfad durch den gleichen Ausgangsport dieses Zwischenknoten geht). Damit kann insbesondere eine Zeit bestimmt werden, wie lange der potenziell zu sendende Datenstrom benötigt, bis er vom Sendeknoten an den Empfangsknoten übertragen wird. Somit kann zuverlässig eine Entscheidung gefällt werden, ob der Datenstrom weiterhin als Kandidat für eine mögliche Annahme angesehen wird oder nicht.

Weiterhin vorteilhaft ist, wenn ein Sendevorgang des Zwischenknotens von potenziellen Störern des potenziell zu sendenden Datenstroms am Zwischenknoten mit bei der Bestimmung der maximalen Übertragungszeit berücksichtigt wird. Insbesondere kann somit die Wartezeit der Datenpakete des potenziell zu übertragende Datenstroms an einem Zwischenknoten in Abhängigkeit der Datenpakete von allen bereits geplanten Datenströmen, die sich zeitgleich in der Warteschlange am Ausgangsport dieses Zwischenknotens befinden können, bestimmt werden. Der potenziell zu übertragende Datenstrom wird dann gedanklich an alle bereits vorhandenen Datenströme angehängt, insbesondere an die ungünstigste Stelle dieser Warteschlange gesetzt (welche die längste Wartezeit in dieser Warteschlange verursacht). Die damit berechnete längste Wartezeit wird dafür verwendet, zu prüfen, ob die entsprechenden Vorgaben, um die bereits vorhandenen Datenströme sowie den Datenstrom zu übertragen, eingehalten werden können.

Eine weitere vorteilhafte Ausgestaltungsform sieht vor, dass ein Worst-Case-Szenario sowohl für die bereits akzeptierten Datenströme als auch für den potenziell zu sendenden Datenstrom angenommen wird, um die maximale Übertragungszeit zu bestimmen. Folglich wird somit nicht nur das Worst-Case-Verhalten des potenziell zu übertragenden Datenstroms genutzt, sondern auch das Worst-Case-Verhalten der bereits akzeptierten Datenströme genutzt. Dazu werden die entsprechenden Datenpakete auf jeder Eingangsverbindung (Eingangs Port) in sogenannte enge Konvois gepackt, und es werden auch bestimmte Frames, zum Beispiel die Längsten, an ihrer schlechtesten Position angenommen. Beispielsweise wird, auf jedem Eingangs Port außer jenem des Frame of Interest (FOI), der längste Frame für ein S&F-Szenario zuerst und für ein CT-Szenario zuletzt oder so knapp, wie möglich, vor dem FOI ankommend platziert. Für den FOI- Eingangs Port wird dies für den Rest des Konvois ohne den FOI durchgeführt. Somit kann sichergestellt werden, dass auch unter Worst-Case-Bedingungen entsprechend die Datenströme übertragen werden können.

Ferner hat es sich als vorteilhaft erwiesen, wenn der Sendevorgang des Zwischenknotens bei der Bestimmung der maximalen Übertragungszeit berücksichtigt wird. Insbesondere ist vorgesehen, dass auch während des Empfangens des potenziell zu sendenden Datenstroms, sowie während seiner Wartezeit, bereits empfangene Datenpakete aus der Warteschlange über den Ausgangsport weitergesendet werden. Dieses Weitersenden der Datenströme kann ebenfalls mitberücksichtigt werden, wodurch (nach zusätzlichen Schritten) die maximale Verzögerung durch Störer an diesem Zwischenknoten zuverlässig bestimmt werden kann.

Es hat sich weiterhin als vorteilhaft erwiesen, wenn das Zeit-sensitive Netzwerk mit zumindest einem Zwischenknoten bereitgestellt wird und die maximale Übertragungszeit in Abhängigkeit von jeweiligen Verzögerungen durch Störer, an dem zumindest einen Zwischenknoten bestimmt wird. Insbesondere können auch mehrere, insbesondere mehr als ein Zwischenknoten bereitgestellt werden. Insbesondere wird somit der gesamte Übertragungspfad berücksichtigt. Somit können die entsprechenden maximalen Verzögerungen durch Störer an jedem Zwischenknoten zuverlässig bestimmt werden, wodurch eine maximale Übertragungszeit bestimmt werden kann, welche insbesondere die entsprechenden Voraussetzungen für das Senden des Datenstroms unter den entsprechenden Bedingungen, insbesondere in Abhängigkeit der Datenstrominformation, erfüllt oder nicht. Somit kann zuverlässig das Zeit-sensitive Netzwerk betrieben werden.

Eine weitere vorteilhafte Ausgestaltungsform sieht vor, dass der zumindest eine Zwischenknoten zeit-unsynchronisiert genutzt wird, sowie auch der Empfangsknoten. Insbesondere ist es somit nicht notwendig, dass der Zwischenknoten und der Empfangsknoten zeitsynchronisiert bereitgestellt werden. Dies ermöglicht eine einfachere Hardware- und Softwarekonfiguration für das Zeit-sensitive Netzwerk.

Ferner hat es sich als vorteilhaft erwiesen, wenn an dem zumindest einen Zwischenknoten ein First-In-First-Out-Prinzip, wie beispielsweise in der IEEE 802.1Q-2022 beschrieben, angewendet wird. Insbesondere kann somit realisiert werden, dass die Datenströme entsprechend ihrer Ankunftszeit abgearbeitet werden. Insbesondere kann hier noch vorgesehen sein, dass beispielsweise prioritätsklassenabhängig entsprechende Datenströme auf dem Zwischenknoten ankommen können und prioritätsklassenabhängig ein First-In-First-Out-Prinzip angewendet wird. Somit kann zuverlässig das Zeit-sensitive Netzwerk betrieben werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit dem Computerprogrammprodukt.

Ein nochmals weiterer Aspekt der Erfindung betrifft eine elektronische Recheneinrichtung für ein Zeit-sensitives-Netzwerk, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Weiterhin betrifft die Erfindung auch ein Zeit-sensitives-Netzwerk mit zumindest der elektronischen Recheneinrichtung.

Vorteilhafte Ausgestaltungsformen des Verfahrens sind als vorteilhafte Ausgestaltungsformen des Computerprogrammprodukts, des computerlesbaren Speichermediums, der elektronischen Recheneinrichtung sowie des Zeit-sensitiven-Netzwerks anzusehen. Die elektronische Recheneinrichtung sowie das Zeit-sensitive-Netzwerk weisen hierzu gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten. Außerdem kann die elektronische Recheneinrichtung auch in Form eines Quantencomputers ausgebildet sein.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst sein, die über die in den Rückbezügen der Ansprüche dargelegten Merkmalskombinationen hinausgehen oder von diesen abweichen.

Dabei zeigen:

FIG 1    ein schematisches Blockschaltbild gemäß einer Ausführungsform eines Zeit-sensitiven-Netzwerks mit einer Ausführungsform einer elektronischen Recheneinrichtung; und

FIG 2    ein schematisches Zeit-Datenpakete-Diagramm.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

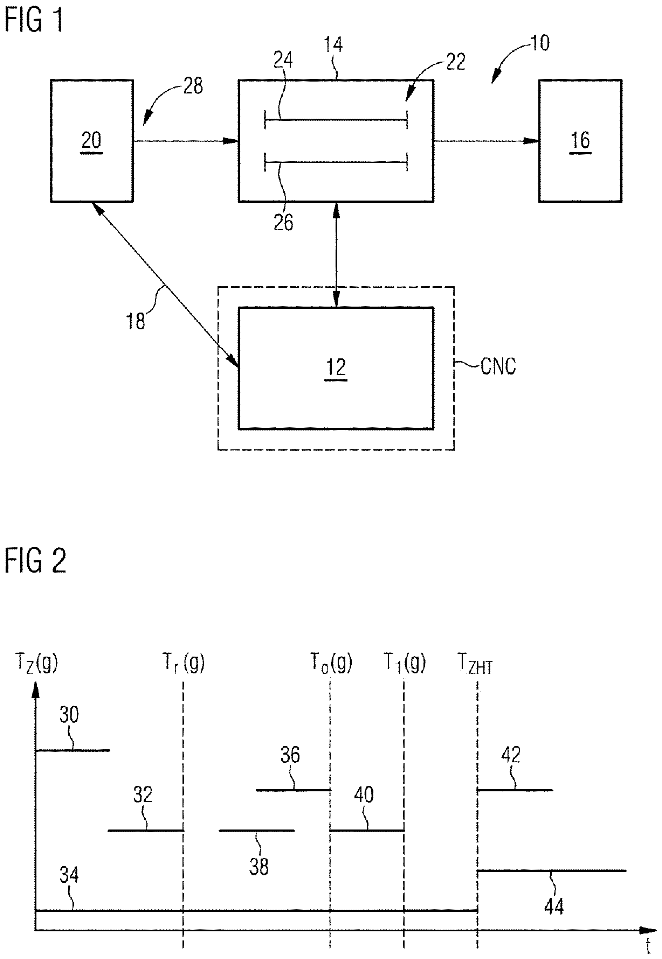

FIG 1 zeigt ein schematisches Blockschaltbild gemäß einer Ausführungsform eines Netzwerks 10. Das Netzwerk 10 weist im folgenden Ausführungsbeispiel zumindest eine elektronische Recheneinrichtung 12 auf. Die elektronische Recheneinrichtung 12 ist dabei zum Ausführen eines entsprechenden nachfolgenden Verfahrens ausgebildet.

Gemäß einer Ausbildungsform des Verfahrens ist vorgesehen, dass das Netzwerk 10 mit zumindest einem Sendeknoten mit potenziell zu sendendem Datenstrom 20, einem Zwischenknoten 14 und einem Endknoten 16 bereitgestellt wird. Es erfolgt das Empfangen einer Datenstrominformation 18 (einschl. vorgegebener, maximal erlaubter Übertragungszeit) über einen potenziell zu sendenden Datenstrom 20 über den Zwischenknoten 14 zu dem Endknoten 16 mittels der elektronischen Recheneinrichtung 12. Es wird eine maximale Verzögerung durch Störer 22 in Abhängigkeit von bereits akzeptierten Datenströmen der Störer 24, 26 am Zwischenknoten 14 mittels der elektronischen Recheneinrichtung 12 bestimmt. Es erfolgt das Bestimmen einer Worst-Case-Übertragungszeit des potenziell zu sendenden Datenstroms 20 in Abhängigkeit von der Datenstrominformation 18 und in Abhängigkeit von der berechneten maximalen Verzögerung durch Störer 22 mittels der elektronischen Recheneinrichtung 12. Es wird dann entschieden, ob der potenziell zu sendende Datenstrom 20 über den Zwischenknoten 14 gesendet wird in Abhängigkeit von der Datenstrominformation 18 und der bestimmten maximalen Übertragungszeit 28 mittels der elektronischen Recheneinrichtung 12.

Vorliegend ist insbesondere ein weiterer Datenstrom des Störers 24 und ein nochmals weiterer Datenstrom des Störers 26 gezeigt, welche als die bereits akzeptierten Datenströme der Störer 24, 26 anzusehen sind.

Insbesondere ist dabei vorgesehen, dass der potenziell zu sendende Datenstrom 20 von der elektronischen Recheneinrichtung 12 immer noch als Kandidat betrachtet wird, wenn die bestimmte Worst-Case-Übertragungszeit 28 über alle Zwischenknoten 14 auf seinem Pfad geringer bestimmt wird als eine in der Datenstrominformation 18 vorgegebene maximale Übertragungszeit. Ferner ist vorgesehen, dass der potenziell zu sendende Datenstrom 20 von der elektronischen Recheneinrichtung 12 abgelehnt wird, wenn die bestimmte Worst-Case-Übertragungszeit 28 über alle Zwischenknoten 14 auf seinem Pfad höher bestimmt wird als eine in der Datenstrominformation 18 vorgegebene maximale Übertragungszeit.

Des Weiteren kann vorgesehen sein, dass die Entscheidung zum Senden in Abhängigkeit von einer der Datenstrominformation 18 vorgegebenen Prioritätsklasse für den potenziell zu sendenden Datenstrom 20 gefällt wird.

Ferner kann insbesondere vorgesehen sein, dass die Entscheidung zum Senden in Abhängigkeit von mindestens einem vorgegebenen Zeitpunkt am Zwischenknoten 14 gefällt wird. Ferner kann vorgesehen sein, dass die maximale Übertragungszeit 28 in Abhängigkeit von einer Wartezeit in dem Zwischenknoten 14 bestimmt wird. Dabei kann die Wartezeit in Abhängigkeit von bereits akzeptierten, vom Zwischenknoten 14 empfangenen und noch zu sendenden Datenströmen 24, 26 bestimmt werden. Des Weiteren kann ein Worst-Case-Szenario für die bereits empfangenen und zu sendenden Datenströme 24, 26 angenommen werden, um die maximale Übertragungszeit 28 zu bestimmen. Ferner kann vorgesehen sein, dass der Sendevorgang der Datenströme 24, 26 des Zwischenknotens 14 mit bei der Bestimmung der maximalen Übertragungszeit 28 berücksichtigt werden.

In der FIG 1 wird insbesondere dargestellt, dass lediglich ein Zwischenknoten 14 vorgesehen sein kann. Es kann jedoch auch vorgesehen sein, dass das Netzwerk 10 mit zumindest zwei Zwischenknoten 14 bereitgestellt wird und die maximale Übertragungszeit 28 in Abhängigkeit von jeweiligen maximalen Verzögerungen durch Störer 22 der zumindest zwei Zwischenknoten 14 bestimmt wird.

Ferner kann vorgesehen sein, dass der zumindest eine Zwischenknoten 14 und der Endknoten zeit-unsynchronisiert bereitgestellt werden. Des Weiteren ist vorgesehen, dass an dem zumindest einen Zwischenknoten 14 ein First-In-First-Out-Prinzip angewendet wird.

FIG 2 zeigt ein schematisches Zeit-Datenstrom (Frame)-Diagramm. Insbesondere sind vorliegend eine Vielzahl an unterschiedlichen Frames beziehungsweise Datenpaketen 30 - 44 gezeigt, welche gesendet werden müssen.

Für das Verfahren ist ein TSN-Netz (time sensitive network - Zeit-sensitives-Netzwerk 10) mit synchronisierten Sendeknoten (zeitbewusste Endstationen, die Datenströme ins Netz senden) gegeben. Die Einspeise-Zyklen der Sendeknoten sind ganzzahlige Vielfache eines gemeinsamen kleinsten Zeitintervalls $GC_{min}$. Ein Sonderfall ist die Wahl der Einspeise-Zyklen als Zweierpotenzen von $GC_{min}$, das vereinfacht die Berechnung. Sowohl bei gleichen als auch bei unterschiedlichen Perioden der Datenströme 20, 24, 26 (Streams) gibt es ein Gesamtzeitintervall (Hyperperiode genannt), nach dem der geplanten Datenverkehr höchster Priorität im Netzwerk wiederholt wird. Weil alle Einspeise-Zyklen Vielfache eines gemeinsamen kleinsten Zeitintervalls $GC_{min}$ sind, weist die gemeinsame Zeitbasis eine Rasterstruktur auf, mit Intervallen im Abstand $GC_{min}$, und es liegen sämtliche Anfangszeitpunkte von Einspeise-Zyklen auf Rasterpunkten. Die Latenzbeschränkung (Übertragungszeitbeschränkung) für Datenpakete 30 - 44 höchster Priorität im Netzwerk ist bekannt (Teil der Datenstrominformation 18). Beispielsweise kann diese bestimmen, dass keine zwei Datenpakete eines Datenstroms 20, 24, 26 gleichzeitig unterwegs sind ("frames in flight" ≤1) Eine stärkere Latenzbeschränkung ist ebenfalls möglich, zum Beispiel, dass der Datenstrom innerhalb seines Einspeisezyklus ankommen muss, oder innerhalb eines echten Bruchteils davon. Dabei sind minimale und maximale Verarbeitungszeiten (Aufenthaltszeiten) in Endknoten 20, 16 und Zwischenknoten 14, in Abwesenheit von Störern, bekannt, sowie die Verzögerungen auf den Übertragungsleitungen. Die maximalen Verarbeitungszeiten (ohne Störer) in allen Zwischenknoten 14, welche auch als Brücken bezeichnet werden, entlang des Pfades eines Datenpakets 30 - 44, einschließlich der Endknoten 16, sowie der Synchronisations-Jitter beim Sendeknoten, werden zu den oberen Schranken der Interferenzverzögerungen addiert, bevor geprüft wird, ob die Übertragungszeit innerhalb der definierten Grenze liegt.

Aufgrund ihrer Synchronisation haben alle Sendeknoten eine gemeinsame Zeitbasis. Weil alle Einspeise-Zyklen Vielfache eines gemeinsamen kleinsten Zeitintervalls $GC_{min}$ sind, weist die gemeinsame Zeitbasis eine Rasterstruktur auf, mit Intervallen im Abstand $GC_{min}$, und es liegen sämtliche Anfangszeitpunkte von Einspeise-Zyklen auf Rasterpunkten.

In jedem einzelnen Einspeise-Zyklus innerhalb der Hyperperiode wird eine Reihe von Datenpaketen (mit oder ohne Lücken) 20, 24, 26 einer definierten, im Netzwerk höchsten, Priorität (im Folgenden "High" genannt) in das Netz eingespeist, die aufgrund ihrer Übertragungszeitbeschränkung in jedem Zwischenknoten ihres Pfades 14 in einem Zeitintervall mit bekannter maximaler Länge vorhanden sind. Ein Sonderfall ist, dass sie ausschließlich während ihres Einspeise-Zyklus vorhanden sind, aber nicht darüber hinaus.

Wenn ein Datenpaket 30 - 44 bei einem Zwischenknoten 14 ankommt, wird das "signifikante Bit" das Bit genannt, dessen Empfang die Eintragung in die Ausgangswarteschlange auslöst. Das signifikante Bit eines Datenpakets 30 - 44 kann an verschiedenen Zwischenknoten 14 entlang seines Pfades unterschiedlich sein, je nach Weiterleitungsmechanismus, in Abhängigkeit von den Fähigkeiten des Zwischenknotens und dem Eingangs- und Ausgangsgeschwindigkeits-Paar der Verbindung.

Beispiel: Bei Store-and-Forward (S&F) ist das signifikante Bit das letzte Bit, während es bei Cut-Through (CT/dCT) nach dem Headerabschnitt liegt, der nötig ist, um den Ausgangsport zu bestimmen.

Ferner sind die nachfolgenden Eigenschaften gegeben: Eine Menge von bereits akzeptierten Strömen S, vorliegend die Datenströme 24, 26, der im Netzwerk höchsten Prioritätsklasse mit ihren Pfaden vom Sendeknoten zum Empfangsknoten 16, die alle ihre Datenstrominformationen erfüllen. Ein neuer Datenstrom mit seiner Datenstrominformation, insbesondere der potenziell zu übertragende Datenstrom 20, der geplant werden soll, zusammen mit einem Einspeise-Zyklus r (das Phase genannt wird), der als der Zyklus betrachtet wird, in dem mit dem Senden des Datenstroms begonnen werden soll. Die Auswahl geeigneter Phasen ist Aufgabe des Moduls Phasenzuweisung der elektronischen Recheneinrichtung, und wird als gegeben betrachtet. Wenn die dem Einspeise-Zyklus r entsprechende Phase nicht zu einer Annahme des neuen Datenstroms führt, kann die elektronische Recheneinrichtung eine andere Phase als Kandidaten für eine Annahme wählen, sofern es noch mögliche unversuchte Phasen gibt.

Der Planungsalgorithmus akzeptiert den neuen Datenstrom in Phase r nur dann, wenn nach seiner hypothetischen Einbeziehung in Phase r die Bedingungen des neuen Datenstroms 20, insbesondere gemäß der Datenstrominformation 18, erfüllt sind und die Bedingungen aller zuvor akzeptierten Datenströme 24, 26 weiterhin erfüllt sind. Andernfalls verweigert der Planungs-Algorithmus die Hinzunahme des neuen Datenstroms in Phase r.

Zur Überprüfung der Übertragungszeiten des Datenpakets beziehungsweise der Datenpakete 30 - 44 wird die folgende Methode verwendet, die auch als Konvoi-Analyse bezeichnet werden kann, um eine Obergrenze (obere Schranke) für die Verzögerung durch Störer eines Datenpakets 30 - 44 an einem bestimmten Zwischenknoten 14 auf seinem Pfad zu bestimmen. Es wird eine Obergrenze für die Worst-Case-Verzögerung durch Störer 22 an diesem Zwischenknoten 14, und darauf beruhend, entlang des ganzen Pfades des betreffenden Datenpakets 30 - 44 bestimmt. Da diese Methode auf der Bestimmung einer Obergrenze für die schlimmstmögliche Warteschlange an jedem Zwischenknoten 14 basiert, kann sie auch zur Überprüfung der Bedingung "kein Verlust" (d. h. kein Pufferüberlauf) verwendet werden.

Im Rahmen der Erfindung werden "spezielle" Zeitpunkte verwendet, die geeignet sind, als Berechnungszeitpunkte für die Verzögerungsanalyse des Frame of Interest (FOI) genutzt zu werden. Der FOI entspricht hierbei dem potenziell zu sendenden Datenpaket 20. Eine erste Gruppe spezieller Zeitpunkte ist "Zero-High-Traffic"-Zeitpunkte, d. h. Zeitpunkte, in denen aufgrund der Eigenschaften des Klassentyps keine Datenpakete (High-Frames) 30 - 44 der definierten Klasse (High), welche denselben Ausgangsport am Zwischenknoten benutzen wie der FOI, auf dem gesamten Pfad des FOI unterwegs sein können. Solche "Zero-High-Traffic"-Zeitpunkte gibt es bei vielen Netzkonfigurationen. Diese Zeitpunkte erleichtern die Berechnung, sind aber nicht unbedingt notwendig. Zum Beispiel ist bei vielen Netzkonfigurationen der Beginn einer neuen Hyperperiode ein solcher Zeitpunkt für alle Zwischenknoten und FOIs. In vielen Fällen liegen die "Zero-High-Traffic"-Zeitpunkte viel näher beieinander. Ein besonderer Fall ist, wenn es einen einzigen gemeinsamen Einspeise-Zyklus für alle Sendeknoten gibt und die maximale Latenz aller Datenströme ein Bruchteil dieses Einspeisezyklus ist. Dann gibt es am Ende eines jeden Einspeise-Zyklus an jedem Zwischenknoten 14 "Zero-High-Traffic". Ein zweiter Sonderfall liegt vor, wenn die High-Frames ihr Ziel innerhalb desselben "Rasterintervalls" der Länge $GC_{min}$ erreichen müssen, in dem sie übertragen wurden. Diese Latenzbeschränkung hat zur Folge, dass am Ende eines jeden Rasterintervalls an jedem Zwischenknoten 14 "Zero-High-Traffic" vorliegt.

Ein zweiter spezieller Zeitpunkt für den FOI ist der Beginn seines Einspeise-Zyklus, $T_0(FOI)$. Wenn dieser Zeitpunkt kein "Zero-High-Traffic"-Zeitpunkt am Zwischenknoten 14 ist, kann es potenziell störende Datenpakete 30 - 44 geben, die früher gesendet wurden und noch während der Laufzeit des FOI unterwegs sind. Aus diesem Grund reicht es nicht, mit der Zusammenstellung der Menge potenzieller Störer zum Zeitpunkt $T_0(FOI)$ zu beginnen.

Für das Datenpaket $f$ 30 - 44 bezeichnet $T_0(f)$ den Beginn seines Einspeise-Zyklus, und $T_1(f)$ den spätesten Zeitpunkt, an dem es aufgrund der Beschränkung der maximalen Latenzzeit sein Ziel erreichen muss. Das Zeitintervall $[T_0(f),T_1(f)]$ wird "(maximale) Lebenszeit" von $f$ genannt.

Aus der Gruppe der ersten speziellen Zeitpunkte ("Zero-High-Traffic"-Zeitpunkte) für den Ausgangsport $i$ wird, sofern sie nicht leer ist, ein Sonderzeitpunkt $T_z(FOI,i)$ bestimmt, als der späteste Zeitpunkt der Gruppe, welcher nicht nach dem zweiten besonderen Zeitpunkt liegt. Wenn diese Gruppe leer ist, wird $T_z(FOI,i)$ als der Beginn der Hyperperiode bestimmt, in welcher $T_0(FOI)$ liegt.

Ein dritter spezieller Zeitpunkt für den FOI ist, aus der Menge der Rasterpunkte, ein geeigneter Zeitpunkt $T_r(FOI)$, Referenzzeitpunkt genannt, der zwischen dem Sonderzeitpunkt $T_z(FOI,i)$ und dem zweiten speziellen Zeitpunkt $T_0(FOI)$ (dem Beginn des FOI-Einspeise-Zyklus) liegt. Der Referenzzeitpunkt kann mit $T_0(FOI)$ oder $T_z(FOI,i)$ übereinstimmen. Insbesondere wird $T_r(FOI) = T_0(FOI)$ als erste Wahlmöglichkeit vorgeschlagen.

Um eine Obergrenze für die Übertragungsverzögerung aufgrund von Störern für den FOI zu erhalten, wird wie folgt vorgegangen.

Für jeden Zwischenknoten 14 auf dem Weg des FOI: Ermitteln des zweiten Zeitpunkts $T_0(FOI)$, und des Sonderzeitpunkts $T_z(FOI,i)$. Die beiden Zeitpunkte können übereinstimmen; Ermitteln der Menge $I_P(FOI)$ aller Datenpakete 30 - 44, die denselben Ausgangsport an diesem Zwischenknoten 14 passieren und innerhalb des Zeitintervalls $(T_z(FOI,i),T_1(FOI))$ im Netzwerk unterwegs sind; Bestimmen eines geeigneten Referenzzeitpunkts $T_r(FOI)$. Da die Einspeise-Zyklen der Sendeknoten ganzzahlige Vielfache eines gemeinsamen kleinsten Zeitintervalls $GC_{min}$ sind, müssen dafür nur höchstens Rasterpunkte in Inkrementen von $GC_{min}$ berücksichtigt werden, d.h. die Zeitpunkte $\{T_z(FOI,i),T_z(FOI,i) + GC_{min},..., T_0(FOI)\}$, und von diesen nur Rasterpunkte an denen Datenpakete in $I_P(FOI)$ beginnen; Für einen bestimmten Referenzzeitpunkt $T_r(FOI)$: Erzeugen aus der Menge $I_P(FOI)$ der potenziellen Störer eine Untermenge von potenziellen Störern $I_r(FOI)$, die alle Datenpakete enthält, deren Lebenszeit sich mit dem Zeitintervall $(T_r(f),T_1(f))$ überschneidet; Erzeugen aus der Menge $I_r(FOI)$ der potenziellen Störer des FOI zwei disjunkte Teilmengen $I_C(FOI)$ und $I_Q(FOI)$, folgendermaßen: $I_Q(FOI)$ enthält alle Frames aus der Menge $I_r(FOI)$, deren Übertragungszeit vor dem Referenzzeitpunkt beginnt und nach diesem endet. Die Frames (Untermenge von 30 - 44) stellen in der nachfolgenden Konvoi-Analyse die Anfangs-Warteschlange dar; $I_C(FOI)$ enthält alle Datenpakete s 30 - 44 in $I_r(FOI)$ deren Lebenszeit

zum oder nach dem Referenzzeitpunkt beginnt. Diese Frames (Untermenge von 30 - 44) werden zur Bildung von Konvois verwendet. Die Mengen $I_C(FOI)$ und $I_Q(FOI)$ können auch direkt erzeugt werden, ohne zuerst $I_P(FOI)$ oder $I_r(FOI)$ zu bestimmen.

Hierfür sind nachfolgend einige Sonderfälle für die Bildung der beiden Mengen von potenziellen Störern $I_Q(FOI)$ und $I_C(FOI)$ aufgeführt. Ein besonderer Fall ist die Einstellung $I_C(FOI) = I_r(FOI)$ und $I_Q(FOI) = \emptyset$. Dieser Fall wird z. B. verwendet, wenn $T_0(FOI)$ ein Mitglied der ersten speziellen Zeitgruppe von "Zero-High-Traffic" ist. Ein zweiter Sonderfall ist, zusätzlich zu der Lebenszeit auch den Eingangs Port zu beachten, und Datenpakete 30 - 44 in $I_r(FOI)$ die am gleichen Eingangsport wie der FOI ankommen, in $I_C(FOI)$, und alle anderen Datenpakete 30 - 44 in $I_r(FOI)$ in $I_Q(FOI)$ zu setzen. Dieser Fall kann z.B. verwendet werden, wenn $T_r(FOI) = T_0(FOI)$ gewählt wird. Die damit berechnete obere Schranke kann effizient, aber weniger eng sein.

Im Anschluss daran wird die Konvoi-Analyse mit den Sets $I_C(FOI)$ und $I_Q(FOI)$ durchgeführt. Das Ergebnis ist die obere Schranke für die Verzögerung des FOI aufgrund von Störern an diesem Zwischenknoten 14, die durch die Wahl der Referenzzeit gegeben ist.

Diese kann als endgültige Referenzzeit gewählt werden und definiert damit die obere Schranke für die Verzögerung des FOI aufgrund von Störern. Die Berechnung kann bei Bedarf mit einer weiteren Referenzzeit wiederholt werden, und aus der Menge gerechneter Referenzzeiten diejenige gewählt werden, die die kleinste (= engste) obere Schranke ergeben hat.

Im nachfolgenden Text wird die Konvoi-Analyse näher beschrieben. Für einen Frame of Interest (FOI) an einem bestimmten Ausgangsport auf seinem Weg: Die Wartezeit des FOI ergibt sich aus allen Datenpakete 30 - 44, die er zum Zeitpunkt seiner Ankunft vor seinem Ausgangsport aufgereiht vorfindet. Das FOI hat die längste Wartezeit und damit die größte Verzögerung, wenn es zum Zeitpunkt der längsten Warteschlange an der Warteschlange des Ausgangsports ankommt. Es werden Konvois mit den Datenpakete 30 - 44 in der Menge $I_C(FOI)$ potenzieller Störer gebildet, d. h., es werden auf jedem Eingangs Port die Datenpakete 30 - 44 in dichte Sequenzen mit nur den minimalen erforderlichen Interframe-Lücken, den sogenannten "min IPG (inter packet gaps)" zwischen den Datenpakete 30 - 44 gepackt. Dabei wird die Länge der min IPG-Lücken als Teil der Frames betrachtet, so dass der Konvoi darüber hinaus lückenlos ist. Der Begriff Konvoi ist eine Abkürzung für eine dicht gepackte Sequenz der verfügbaren störenden Datenpakete 30 - 44 an einem Port. Dabei ist $c(j)$ die Gesamtlänge des Konvois auf dem Eingangs Port $j$ (einschließlich der Interframe-Lücken). Es wird nicht nur eine Obergrenze für das Worst-Case-Verhalten festgelegt, indem die Frame-Sequenzen auf einem Eingangs Port in Konvois gepackt werden, sondern es werden auch bestimmte Datenpakete 30 - 44, z. B. die längsten, an ihrer schlechtesten Position angenommen, wenn dies zu einem schlechteren Szenario führt.

Beispielsweise für S&F wird der längste Frame 30 - 44 zuerst und für CT zuletzt auf jedem Eingangs Port außer dem Port des FOI platziert. Für den Port des FOI wird dies für den Rest des Konvois (ohne den FOI) durchgeführt.

Wenn die Datenpakete 30 - 44 dicht gepackt in Konvois in der Warteschlange vor dem Ausgangsport des Zwischenknotens ankommen, markiert jeder Endzeitpunkt eines Konvois eine (weitere) Verringerung des Verhältnisses von Zufluss zu Abfluss in der Warteschlange. Würden die Datenpakete kontinuierlich (bitweise) in die Warteschlange gelangen, dann würde die Länge der Warteschlange zunehmen, wenn die Summe der Eingangsportgeschwindigkeiten größer ist als die Ausgangsportgeschwindigkeit; der letzte Zeitpunkt, an dem dieses Verhältnis zutrifft, wäre der letzte Zeitpunkt, an dem der Pufferpegel (Fülllevel der Warteschlange) noch ansteigt, wonach er gleich bleibt, solange Zufluss und Abfluss gleich sind, und wonach er abnimmt, wenn der Zufluss geringer wird als der Abfluss.

Bei einer Menge von Eingangs Ports mit ihren jeweiligen Portgeschwindigkeiten und einer Ausgangsportgeschwindigkeit am Zwischenknoten, sowie aus $I_C(FOI)$ gebildeten Konvois bestimmter Länge an den jeweiligen Eingangs Ports, erhält man die *Zeit* **0** (für die spätere Berechnung), indem man die parallel einlaufenden Konvois zeitlich so ausrichtet, dass die signifikanten Bits der ersten Datenpakete 30 - 44 der Konvois auf allen Ports außer dem FOI-Port zeitgleich bei Zeit 0 liegen. Die High-Warteschlange zum Zeitpunkt $0 - \varepsilon$ (für ein $\varepsilon > 0$) enthält die Datenpakete aus $I_Q(FOI)$. Aufgrund der Ausrichtung tritt die größtmögliche Sprungfunktion im Inhalt der Warteschlange zum Zeitpunkt $0 + \varepsilon$ ein. Der Zeitpunkt **T** befindet sich am Ende jenes Konvois, nach dessen Ende die kombinierten Geschwindigkeiten der Eingangs Ports nicht mehr größer als die des Ausgangsports sind, oder, wie angegeben, wenn sie nicht mehr größer oder gleich sind. Die Zeit t* ist der Zeitpunkt der größten Auslastung, d. h. der längsten Warteschlangenlänge, und somit der ungünstigste Zeitpunkt für den FOI, sich in die Warteschlange einzureihen. Es kann mehrere Zeitpunkte geben, die dieses Maximum erreichen. Wie bereits erläutert, ist für den Zeitpunkt **t*** ein guter Kandidat **t*** = **T** oder ein naheliegender Zeitpunkt aufgrund von Diskretisierungseffekten durch die Frame-Granularität und die Weiterleitung. Die Menge $I_Q(FOI)$ wird zum Zeitpunkt 0 in die Warteschlange gestellt, mit einer Bit-Länge von **QL(0).**

Es wird die Menge der Knoten im Netz mit **B,** und die Menge der Endknoten 16 mit $E \subset B$ bzeichnet. Jeder Endknoten 16 $b \in E$ besitzt einen Einspeise-Zyklus $gc(b) > 0$. An jedem Endknoten 16 werden die Einspeise-Zyklen mit einer Zahl $n \in N$ bezeichnet. $GC_{min}$ ist der größte gemeinsame Teiler aller Einspeise-Zyklen. Einspeise-Zyklen sind somit ganzzahlige Vielfache von $GC_{min}$, mit anderen Worten $gc(b)/GC_{min} \in N$ für jede $b \in E$. Insbesondere, wenn die

$$GC_{min} = \min_{b \in E} gc(b)$$

Quotienten der Einspeise-Zyklen Potenzen von zwei sind, dann                    . Der entsprechende Satz von Verbindungen ("Links") zwischen Knoten lautet **L**. Ein Link $l \in L$ überträgt Datenpakete 30 - 44 von Knoten $in(l) \in B$ zu Knoten $out(l) \in B$ mit einer Bitrate $v(l) > 0$. Die Bitrate des Links ist somit zugleich Portgeschwindigkeit des Ausgangsports des Knotens $in(l)$ und Portgeschwindigkeit des Eingangs Ports des Knotens $out(l)$. **S** ist die Menge der Datenströme 20, 24, 26. Ein Datenstrom 20, 24, 26 $s \in S$ besteht aus Datenpaketen 30 - 44 von Endknoten $SB(s) \in E$ bis Endknoten $TB(s) \in E$. Die Datenpakete 30 - 44 des Datenstroms **s** haben die gleiche Framelänge **fl(s)** in Bits (einschließlich der Länge von Header und min IPG) .

Der Pfad eines Datenstroms **s** mit einer Anzahl $H(s)$ von Links ist durch das Tupel $r(s) = \{r_1(s), ..., r_{H(s)}(s)\} \in L^{H(s)}$ gegeben. Die Datenpakete 30 - 44 des Datenstroms werden durch die Links des Pfades $r(s)$ geleitet.

Der Datenstrom $s \in S$ wird eingespeist in einen Einspeise-Zyklus mit Länge **gc(s)** = **gc(SB(s))**. Ausgehend von der erforderlichen Periodizität des Datenstrom-Zyklus der zugrundeliegenden Anwendung, dem Anwendungs-Zyklus **StreamCycle(s)** (Zeitintervall zwischen aufeinanderfolgenden Einspeise-Zyklen des Datenstroms), hat der Datenstrom **s** auch ein sogenanntes Reduktionsverhältnis **RR(s)**, gegeben durch **StreamCycle(s) := gc(SB(s)) · RR(s)**.

Die Planung bestimmt für jeden Datenstrom $s \in S$ seine Phase $\phi(s) \in \{1,...,RR(s)\}$ und seine Sendereihenfolge in der Sendewarteschlange, $v(s) \in N$. Die Menge der Datenströme 20, 24, 26, die ein Datenpaket 30 - 44 im Endknoten 16 **b** im Einspeise-Zyklus Nummer **n** einspeisen sind

$$S(b, k) := \{s \in S : SB(s) = b \ \wedge \ n \equiv_{RR(s)} \phi(s)\}$$

Es wird mit "maximum latency fraction" **mlf(s)** der (möglicherweise unechte, insbesondere größer als 1) Bruchteil des Einspeise-Zyklus bezeichnet, innerhalb dessen jeder Frame 30 - 44 des Datenstroms **s** aufgrund der Beschränkung der maximalen Latenzzeit sein Ziel erreichen muss. Beispielsweise gilt im Falle der Übertragungszeitbeschränkung "frames-in-flight ≤ 1" **mlf(s) ≤ RR(s)**.

Der Frame $f \in F := S \times N$ gehört zum Datenstrom $s(f) \in S$ und hat die Nummer $n(f) \in N$. Datenpakete 30 - 44 erben die Eigenschaften ihres Datenstroms 20, 24, 26, z. B. Einspeise-Zyklus **gc(f)** = **gc(s(f))**, Reduktionsverhältnis **RR(f)= RR(s(f))**, Framelänge **fl(f) = fl(s(f)**, maximum latency fraction **mlf(f) = mlf(s(f)**, Phase $\phi(f) = \phi(s(f))$.

$\mathcal{H}(s) := \{1, ..., H(s)\}$ ist die Menge der Link-Nummern auf dem Pfad des Datenstroms **s**. Der Start ist im Sendeknoten. Die Menge der "FrameLinks" ist $FH := \{(f,h) \in F \times N : h \in H(s(f))\}$. FrameLinks (f,h) geben den Frame **f** und die Nummer **h** des nächsten Links (oder des äquivalenten Ausgangsports) im Pfad an. Der Datenstrom eines FrameLinks ist der Datenstrom des Datenpakets 30 - 44, d.h., **s(f,h): = s(f)** und der Link eines FrameLinks ist der nächste Link im Pfad, d. h., **L(f,h): = $r_h(s(f))$**.

Die Hyperperiode HP ist das kleinste gemeinsame Vielfache der Anwendungs-Zyklen {*StreamCycle(s)*, $s \in S$}. Aufgrund der Synchronisierung der Endknoten 16 wiederholt sich der Sendevorgang nach jeder Hyperperiode identisch. Daher kann ohne Verlust der Allgemeinheit die Aufmerksamkeit auf das Zeitintervall **[0,HP]** gelegt werden.

Die maximale Lebenszeit eines Frames **f** ist **[$T_0(f), T_1(f)$),** wobei

$$T_0(f) = (RR(f)(n(f) - 1) + \phi(f)) \cdot gc(f)$$

$$T_1(f) = T_0(f) + mlf(f) \cdot gc(f)$$

Anhand der maximalen Lebenszeiten kann die Anforderung, dass kein Frame 30 - 44 verloren gehen darf, überprüft werden, indem an jedem Zwischenknoten 14 geprüft wird, dass die Summe der Framelängen über die maximal mögliche Menge von Datenpakete 30 - 44, die über denselben Ausgangsport laufen, zu keinem Zeitpunkt innerhalb von HP die entsprechende Puffergröße überschreitet.

"Zero-High-Traffic"-Zeiten sind Zeitpunkte, die nicht innerhalb einer maximalen Lebenszeit liegen, d. h. alle Zeitpunkte $t \in R_+$ die folgende Bedingung erfüllen: $t \notin \bigcup_{f \in F}(T_0(f), T_1(f))$. Beispiele für "Zero-High-Traffic"-Zeiten sind in der Fig. 2 dargestellt.

Die jüngste (am wenigsten zurückliegende) "Zero-High-Traffic"-Zeit eines FrameLinks **(g,i)** $\in$ **FH** ist

$$T_z(g, i) := \sup \{t \leq T_0(g): \forall (f, h) \in FH \ mit \ L(f, h) = L(g, i), t \notin (T_0(f), T_1(f))\}$$

Diese Menge kann auch leer sein.

Für den interessierenden FrameLink (g,i) $\in$ FH mit **i > 1** wird eine Referenzzeit $T_r(g) \in [T_z(g, i), T_0(g)]$ gewählt. Dann ist die Menge $I_Q(g,i)$ der potenziellen Störer, welche zurzeit 0 in der Warteschlange angenommen werden, gegeben durch alle FrameLinks **(f, h)** $\in$ **FH** die erfüllen **L(f, h) = L(g, i)** und $T_r(g) \in (T_0(f), T_1(f))$. Die Menge $I_C(g,i)$ der potenziellen Störer, welche zur Bildung der Konvois dienen, ist gegeben durch alle FrameLinks **(f,h)** $\in$ **FH** die erfüllen **L(f,h) = L(g,i)** und

$T_0(f) \in [T_r(g), T_1(g)]$.

Beispielsweise, $S = \{s_1, s_2, s_3, s_4, s_5\}$, wie in FIG 2 dargestellt. Der FOI ist g = 40 beim Link *i* mit *i* > **1**, *i* < *H*($s_2$), und hat $T_z(g,i)$ als jüngste Zero-High-Traffic-Zeit. Datenströme $s_1$ zu $s_5$ haben Link *L(g,i)* in ihrem Pfad. Die Wahl der Referenzzeit bestimmt die Mengen $I_Q(g,i)$ und $I_C(g,i)$. Zum Beispiel

Wenn $T_r(g) = T_z(g)$ dann $I_Q(g, i) = \emptyset$ und $I_C(g, i) = \{30, 36, 32, 38, 34, FOI\}$ .
Wenn $T_r(g) = T_0(g)$ dann $I_Q(g,i) = \{34\}$ und $I_C(g,i) = FOI$.
Wenn $T_r(g)$ wie gezeigt in der FIG 2 dargestellt ist, dann $I_Q(g,i) = \{34\}$ und $I_C(g,i) = \{36, 38, FOI\}$.

Im Folgenden werden zwei Methoden vorgestellt, um die Verzögerung des FOI beziehungsweise die Wartezeit an einem Zwischenknoten 14 zu begrenzen. Es werden die folgenden Notationen verwendet:

$v_e$:= die Linkgeschwindigkeit am Ausgangsport *e*

$v_j$:= die Linkgeschwindigkeit am Eingangs Port *j*, welcher Datenpakete empfängt, die über Ausgangsport *e* übertagen werden

$In_e$:= die Menge der Eingangs Ports, über welche die Datenpakete der Menge $I_C$(FOI) in den Zwischenknoten 14 zum Ausgangsport e einfließen

$c(j)$:= die Gesamtbitlänge des Konvois am Eingangsport $j \in I_e$ zum Ausgangsport e, gebildet aus Datenpaketen der Menge $I_C$(FOI) durch Summierung ihrer Framelängen in Bits (einschließlich der Länge von Header und min IPG)

t*:= Zeitpunkt größter Warteschlangenlänge (oft der späteste Zeitpunkt, an dem der Zufluss den Abfluss übersteigt); Zeit 0 ist der Beginn der durch die signifikanten Bits ausgerichteten Konvois

FOI = Frame of Interest (der im Zwischenknoten 14 auf dem Eingangs Port *i* ankommt und zum Ausgangsport e geht)

**i:** = Eingans Port des FOI

e: = Ausgangsport des FOI

*fl*:= FOI-Framelänge

$FL_{max}(j)$ := die Länge des größten Datenpakets in *c(j)*

$FL_{max}(i, fl)$ := die Framelänge des größten Datenpakets in *c(i)* mit Ausnahme des FOI

*w(FOI)* := die längste Wartezeit für den FOI

$\tau_{lp}$ := die maximale Verzögerung durch Datenpakete niedrigerer Priorität

$bits_{in}^{ff}[0,t] :$
$\quad j \neq i$
$\qquad$ =ebenso, aber nur über Eingangs Ports, die von i (dem Eingangs Port von FOI) verschieden sind

$bits_{in}^{ff}[0,t] :$
$\quad j = i$
$\qquad$ =ebenso, aber nur über Eingangs Port i

$bits_{in}^{ff}[0,t] :=$
$\qquad$ die Anzahl von Bits, die im Zeitintervall **(0,t]** in die Warteschlange gelangen (ff steht für Framegranularität und forwarding)

$bits_{out}[0,t]$: = die Anzahl von Bits, die im Zeitintervall **(0, t]** die Warteschlange verlassen

$QL(t)$: = die Anzahl von Bits in der Warteschlange zur Zeit **t**

Gemäß der ersten Methode zur oberen Begrenzung der Wartezeit (Verspätung) des FOI an einem Zwischenknoten 14 entsteht die längste Wartezeit, wenn der Frame 30 - 44 die größte Warteschlange vor sich hat:

$$\mathrm{w(FOI)} = \frac{1}{v_e} \cdot \max_{t \geq 0} QL(t)$$

(1)

Eine obere Schranke für die Wartezeit des FOI wird durch die nachfolgende Formel ermittelt:

$$w(FOI) \leq \tau_{lp} + \frac{QL(0)}{v_e} + \frac{1}{v_e} \cdot \max_{t \geq 0} \left\{ \sum_{\substack{j \in In_e \\ j \neq i}} bits_{\substack{in \\ j \neq i}}^{ff}[0, t] + bits_{\substack{in \\ j = i}}^{ff}[0, t] - v_e \cdot t \right\}$$

(2)

Die maximale Anzahl von Bits, die in die Warteschlangen gelangen, wird nach oben begrenzt, indem Konvois gebildet werden und die Ankunft des FOI zum Zeitpunkt $t^*$ der größten Auslastung vorgesehen wird. Unter der Annahme, dass die FOI zum Zeitpunkt $t^*$ eintrifft, würde es die ungünstigste Wartezeit erfahren, wobei die obere Grenze sich aus (2) ergibt, durch die Einstellung $t = t^*$, d.h.

$$w(FOI) \leq \tau_{lp} + \frac{QL(0)}{v_e} + \frac{1}{v_e} \cdot \left( \sum_{\substack{j \in In_e \\ j \neq i}} bits_{\substack{in \\ j \neq i}}^{ff}[0, t^*] + bits_{\substack{in \\ j = i}}^{ff}[0, t^*] - v_e \cdot t^* \right)$$

(3)

Während eines Zeitintervalls [0,t] ist die Anzahl von einzelnen Bits, die maximal auf dem Eingangs Port $j$ mit der

$$bits_{\substack{in \\ line\ j}}[0, t] \leq v_j \cdot t$$

Portgeschwindigkeit $v_j$ ankommen können . Wenn der Bitstrom innerhalb dieses Intervalls enden kann, dann gilt für eine Länge $L$ der verfügbaren Bits:

$$bits_{\substack{in \\ line\ j}}[0, t] \leq \min \{v_j \cdot t, L\}$$

Da die Datenpakete 30 - 44 nicht kontinuierlich ankommen und ihre gesamte Länge in dem Moment in die Warteschlange einfließt, in dem das signifikante Bit ankommt, müssen je nach Weiterleitungsmechanismus marginale Effekte berücksichtigt werden. So kann beispielsweise bei einer S&F-Verbindung ein Frame 30 - 44 mit seinem letzten signifikanten Bit am Anfang des Zeitintervalls ankommen oder bei einer DCT-Verbindung kann ein Frame 30 - 44 mit seinem weit vorne im Datenpaket liegenden signifikanten Bit am Ende des Zeitintervalls eintreffen.
Für einen allgemeinen Eingangs Port, der nicht das FOI enthält, und eine Konvoi Länge von $c(j)$ gilt:

$$bits_{\substack{in \\ j \neq i}}^{ff}[0, t] \leq \min\{FL_{max}(j) + v_j \cdot t, c(j)\} := \alpha_j(t)$$

(4)

Es wird dabei die in (4) gegebene Obergrenze für die verfügbaren störenden Bits auf den eingehenden Eingangs Ports $j$ welche nicht das FOI enthalten mit $\alpha_j(t)$ bzeichnet.
Für den Link des FOI ist es wichtig, den FOI an die Position der maximalen Verzögerung zu platzieren. Es wird eine geeignete Obergrenze für die verfügbaren störenden Bits auf dem eingehenden Eingangs Port (Link) $i$ des FOI der

Länge $fl$ mit $\alpha_{i,fl}^{ff}(t)$ bezeichnet:

$$bits_{\substack{in \\ j = i}}^{ff}[0, t] \leq \alpha_{i,fl}^{ff}(t)$$

(5)

Für die Weiterleitungsmodi CT und S&F sind geeignete Obergrenzen für den Link des FOI gegeben durch:

13

$$\alpha_{i,fl}^{CT}(t) = \min\{v_i \cdot t, c(i) - fl\}$$
$$\alpha_{i,fl}^{S\&F}(t) = \max\{fl, \min\{FL_{max}(i, fl) + v_i \cdot t, c(i)\}\} - fl$$

$(6)$

Bei S&F kann die ungünstigste Position für das FOI am Anfang liegen, wenn das FOI das längste Einzelframe in seinem Konvoi ist. In der oberen Schranke wird die Länge des FOI abgezogen, da seine Länge nicht zur Wartezeit beiträgt (nur zur Verzögerung, daher wird sie dort addiert).

Wenn das FOI mittels CT/dCT weitergeleitet wird, ist seine schlechteste Position am Ende des Intervalls, wenn die Summe der eingehenden Verbindungsgeschwindigkeiten größer ist als die Verbindungsgeschwindigkeit des Ausgangsports. Die Position spielt keine Rolle, wenn es nur einen eingehenden Link gibt, welcher die gleiche Geschwindigkeit wie der Link des Ausgangsport hat. Die FOI-Länge spielt keine Rolle für die Wartezeit (wohl aber für die Verzögerung).

Mit den Gleichungen (4) und (5) kann die Gleichung (2) geschrieben werden als:

$$w(FOI) \le \tau_{lp} + \frac{QL(0)}{v_e} + \frac{1}{v_e} \cdot \left( \sum_{\substack{j \in In_e \\ j \ne i}} \alpha_j(t^*) + \alpha_{i,fl}^{ff}(t^*) - v_e \cdot t^* \right)$$

Für viele praktische Situationen kann die Zeit t* des schlimmsten Staus, der das Maximum in dieser Formel erreicht, durch Untersuchung der Konvois für die gegebenen Konvoilängen, längsten Frame 30 - 44 in jedem Konvoi, Verbindungsgeschwindigkeiten und Weiterleitungsmodi bestimmt werden.

Beispielsweise würde bei einem Zwischenknoten 14 mit reiner Cut-Through-Weiterleitung, diese Methode als Zeitpunkt *t** der schlimmsten Auslastung ergeben

$$t^* = \max \left\{ \max_{\substack{j \in I_e \\ j \ne i}} \frac{c(j) - FL_{max}(j)}{v_j}, \frac{c(i) - fl}{v_i} \right\}$$

Und eine daraus resultierende schlechteste Wartezeit für den FOI von

$$w(FOI) \le \tau_{lp} + \frac{QL(0)}{v_e} + \frac{1}{v_e} \cdot \left( \sum_{j \in I_e} c(j) - fl - t^* \cdot v_e \right)$$

Eine zweite Methode bildet eine Variation der ersten Methode zur Bestimmung der Obergrenze der Wartezeit (Verspätung) von FOI an einem Zwischenknoten 14. Mit den Gleichungen (4) und (5) ohne weitere Feinanalyse kann eine zweite Möglichkeit, eine Obergrenze zu erhalten, aufgezeigt werden. Diese zweite Methode ist aufgrund ihrer Allgemeingültigkeit und des Einblicks, den sie bietet, nützlich. Die Obergrenze der zweiten Methode stimmt meistens mit der Obergrenze der ersten Methode überein und ist ansonsten nur etwas lockerer.

Die Maximierung in (2) kann als die Suche nach dem Maximum der Differenz zweier Funktionen angesehen werden. Die erste Funktion erhält man durch Summierung der einzelnen oberen Schrankenfunktionen, $\alpha_j(t), j \ne i$, und

$$\alpha_{i,fl}^{ff}(t)$$

, in (4) und (6) definiert, die alle stückweise lineare Funktionen mit drei Segmenten sind: das erste ist eine Stufe (möglicherweise mit der Höhe 0, wenn dieser Teil fehlt); die Steigung des mittleren Teils entspricht der Portgeschwindigkeit des jeweiligen Eingangs Ports; und das dritte Segment ist flach und beginnt, wenn der Konvoi beendet ist. Diese stückweisen linearen Funktionen sind im Wesentlichen die maximalen Ankunftskurven (Zufluss kurven) an diesen Eingangs Ports. Die zweite Funktion, die subtrahiert wird, ist eine lineare Funktion, deren Steigung der Portgeschwindigkeit des Ausgangsport entspricht, und entspricht der (maximalen) Abflusskurve. Die stückweise lineare Funktion ändert ihre Steigung an den Zeitpunkten $T(j)$. Ihre Anzahl entspricht der Menge der Eingangs Ports der potenziellen Störer in $I_C(g,i)$. Um das Maximum der Differenz in (2) zu finden, wird die Differenz an den Zeitpunkten $T(j)$ ausgewertet, und das Maximum unter diesen Berechnungen gewählt.

**Patentansprüche**

1. Verfahren zum Betreiben eines Netzwerks (10) mit Zeit-Sensitivem Nachrichtenverkehr, mittels einer elektronischen Recheneinrichtung (12) dieses Netzwerks (10), mit den Schritten:

   - Bereitstellen des Netzwerks (10) mit zumindest einem Sendeknoten, zumindest einem Zwischenknoten (14) und zumindest einem Endknoten (16);
   - Empfangen einer Datenstrominformation (18) durch die elektronische Recheneinrichtung (12) über einen potenziellen zu sendenden Datenstrom (20) über den Zwischenknoten (14) zu dem Endknoten (16);
   - Bestimmen einer aktuellen Menge an vorherrschenden potenziellen Störern (24, 26) aus bereits akzeptierten Datenströmen am Zwischenknoten (14) mittels der elektronischen Recheneinrichtung (12);
   - Bestimmen einer maximalen Verzögerung durch Störer (22) am Zwischenknoten (14) in Abhängigkeit von der Datenstrominformation (18) und in Abhängigkeit von der aktuellen Menge an vorherrschenden potenziellen Störern (24, 26) mittels der elektronischen Recheneinrichtung (12);
   - Bestimmen einer Worst-Case-Übertragungszeit (28) des potenziell zu sendenden Datenstroms (20) in Abhängigkeit von der Datenstrominformation (18) und in Abhängigkeit von der maximalen Verzögerung durch Störer (22) an jedem der zumindest einen Zwischenknoten (14) mittels der elektronischen Recheneinrichtung (12); und
   - Entscheiden, ob der potenziell zu sendende Datenstrom (20) über den Zwischenknoten (14) gesendet wird in Abhängigkeit von der Datenstrominformation (18) und der bestimmten Worst-Case-Übertragungszeit (28) mittels der elektronischen Rechenrichtung (12).

2. Verfahren nach Anspruch 1, **dadurch gekennzeichnet, dass** zum Betreiben des Netzwerks (10) die elektronische Recheneinrichtung (12) mittels einer zentralen Kontrolleinheit (CNC) implementiert wird, welche über eingehenden Kommunikations-Anträgen von Endknoten (16) des Netzwerks (10) entscheidet, insbesondere über die Hinzunahme von durch diese Anträge beantragten potenziell zu sendenden Datenströmen (20).

3. Verfahren nach Anspruch 1 oder 2, **dadurch gekennzeichnet, dass** die Hinzunahme des potenziell zu sendenden Datenstroms (20) in einem gegebenen Einspeisezyklus über den Zwischenknoten (14) von der elektronischen Recheneinrichtung (12) abgelehnt wird, wenn die bestimmte Worst-Case-Übertragungszeit (28) höher bestimmt wird, als eine in der Datenstrominformation (18) vorgegebene maximale Übertragungszeit, und dass der potenziell zu sendende Datenstrom (20) in dem gegebenen Einspeisezyklus über den Zwischenknoten (14) von der elektronischen Recheneinrichtung (12) akzeptiert oder weiterhin als Kandidat betrachtet wird, wenn die bestimmte Worst-Case-Übertragungszeit (28) geringer oder gleich bestimmt wird als eine in der Datenstrominformation (18) vorgegebene maximale Übertragungszeit.

4. Verfahren nach einem der vorhergehenden Ansprüche, **dadurch gekennzeichnet, dass** in Abhängigkeit von der bestimmten Worst-Case-Übertragungszeit (28) eine weitere Worst-Case-Übertragungszeit (28) für jeden Störer (24, 26) in der aktuellen Menge an vorherrschenden potenziellen Störern (24, 26) bestimmt wird, und der potenziell zu sendende Datenstrom (20) von dem Zwischenknoten (14) nur dann angenommen wird, wenn ein jeweils vorgegebener Schwellwert für die weitere Worst-Case-Übertragungszeit (28) jedes Störers (24, 26) nicht überschritten wird.

5. Verfahren nach einem der vorhergehenden Ansprüche, **dadurch gekennzeichnet, dass** die Entscheidung zum Senden in Abhängigkeit von einem vorgegebenen Zeitpunkt am Zwischenknoten (14) gefällt wird.

6. Verfahren nach einem der vorhergehenden Ansprüche, **dadurch gekennzeichnet, dass** die Entscheidung zum Senden in Abhängigkeit von einer in der Datenstrominformation (18) vorgegebenen Prioritätsklasse und/oder Sendereihenfolge und/oder vorgegebenen Sendezeitpunkten für den potenziell zu sendenden Datenstrom (20) gefällt wird.

7. Verfahren nach einem der vorhergehenden Ansprüche, **dadurch gekennzeichnet, dass** eine Übertragungszeitbeschränkung, die insbesondere Teil der Datenstrominformation (18) ist, festgelegt, bekannt aber uneingeschränkt ist.

8. Verfahren nach einem der vorhergehenden Ansprüche, **dadurch gekennzeichnet, dass** eine Obergrenze für die Wartezeit in Abhängigkeit von bereits empfangenen und noch zu sendenden Datenströmen (20) am Zwischenknoten (14) bestimmt wird.

9. Verfahren nach einem der vorhergehenden Ansprüche, **dadurch gekennzeichnet, dass** ein Worst-Case-Szenario für den zu sendenden Datenstrom (20) und/oder für die vorherrschenden potenziellen Störer (24, 26) angenommen wird, um die Worst-Case-Übertragungszeit (28) zu bestimmen.

10. Verfahren nach einem der vorhergehenden Ansprüche, **dadurch gekennzeichnet, dass** ein Sendevorgang des Zwischenknotens (14) von potenziellen Störern (24, 26) des potenziell zu sendenden Datenstroms (20) am Zwischenknoten (14) mit bei der Bestimmung der maximalen Übertragungszeit (28) berücksichtigt wird.

11. Verfahren nach einem der vorhergehenden Ansprüche, **dadurch gekennzeichnet, dass** das Netzwerk (10) mit zumindest zwei Zwischenknoten (14) bereitgestellt wird und die maximale Übertragungszeit (28) in Abhängigkeit von jeweiligen maximalen Verzögerungen durch Störer (22) der zumindest zwei Zwischenknoten (14) bestimmt wird.

12. Verfahren nach einem der vorhergehenden Ansprüche, **dadurch gekennzeichnet, dass** der zumindest eine Zwischenknoten (14), sowie der Endknoten, zeit-unsynchronisiert bereitgestellt werden.

13. Computerprogrammprodukt mit Programmcodemitteln, welche eine elektronische Recheneinrichtung (12) dazu veranlassen, wenn die Programmcodemittel von der elektronischen Recheneinrichtung (12) abgearbeitet werden, ein Verfahren nach einem der Ansprüche 1 bis 12 durchzuführen.

14. Computerlesbares Speichermedium mit zumindest einem Computerprogrammprodukt nach Anspruch 13.

15. Elektronische Recheneinrichtung (12) für ein Netzwerk (10), wobei die elektronische Recheneinrichtung (12) zum Durchführen eines Verfahrens nach einem der Ansprüche 1 bis 12 ausgebildet ist.

FIG 1

FIG 2

Europäisches
Patentamt

European
Patent Office

Office européen
des brevets

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 869 752 A1 (MOXA INC [TW]) 25. August 2021 (2021-08-25) * Abbildungen 1,3 * * Absätze [0004], [0010], [0016], [0021], [0026] – [0028], [0037], [0039] * ----- | 1-15 | INV. H04L47/127 H04L47/28 H04L47/78 H04L47/80 H04L47/70 |
| X | GARTNER CHRISTOPH ET AL: "On the Incremental Reconfiguration of Time-sensitive Networks at Runtime", 2022 IFIP NETWORKING CONFERENCE (IFIP NETWORKING), IFIP, 13. Juni 2022 (2022-06-13), Seiten 1-9, XP034153866, DOI: 10.23919/IFIPNETWORKING55013.2022.9829815 [gefunden am 2022-07-22] * Absätze [00IV], [IV.A], [0V.A] * * Abbildungen 1-3 * ----- | 1-15 | |

| RECHERCHIERTE SACHGEBIETE (IPC) |
|---|
| H04L |

Der vorliegende Recherchenbericht wurde für alle Patentansprüche erstellt

| Recherchenort | Abschlußdatum der Recherche | Prüfer |
|---|---|---|
| Den Haag | 6. Mai 2024 | Kesting, Christiane |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2024

| Im Recherchenbericht angeführtes Patentdokument | Datum der Veröffentlichung | Mitglied(er) der Patentfamilie | | Datum der Veröffentlichung |
|---|---|---|---|---|
| EP 3869752 A1 | 25-08-2021 | CN | 113300956 A | 24-08-2021 |
| | | EP | 3869752 A1 | 25-08-2021 |
| | | JP | 7089606 B2 | 22-06-2022 |
| | | JP | 2021136688 A | 13-09-2021 |
| | | TW | 202133654 A | 01-09-2021 |

EPO FORM P0461

Für nähere Einzelheiten zu diesem Anhang : siehe Amtsblatt des Europäischen Patentamts, Nr.12/82